# EUROPEAN PATENT APPLICATION

(11) **EP 4 521 085 A1**
(43) Date of publication of application: **12.03.2025**
(21) Application number: 23195285.4
(22) Date of filing: 05.09.2023
(51) Int. Cl.: G01L 9/00

(54) **PRESSURE SENSING ELEMENT AND METHOD OF MANUFACTURE THEREOF**

(71) Applicant: Melexis Technologies NV, 3980 Tessenderlo (BE)
(72) Inventor: VAN THIENEN, Jietse, 3980 Tessenderlo (BE)
(74) Representative: Kay, Ross Marcel

(57) **Abstract**

A pressure sensing element (100) for a pressure sensor device comprises a substrate portion (102) comprising a cavity (104) formed therein, a mouth (184) of the cavity (104) having an opening periphery (186). A membrane layer (106) overlies the opening periphery (186) of the cavity (104), and a strain gauge element (166, 168, 170, 172) is disposed on the membrane layer (106) over the cavity (104). The cavity (104) comprises a primary cavity (118) and a first annex (120) integrally formed with the primary cavity (118).

## Description

The present invention relates to a pressure sensing element of the type that, for example, comprises a membrane with a strain gauge element formed thereon, the membrane being disposed over a cavity formed in a substrate. The present invention also relates to a method of manufacturing a pressure sensing element, the method being of the type that, for example, comprises forming a membrane over a cavity formed in a substrate, and forming a strain gauge element on the membrane.

In the field of pressure sensor elements, a known structure comprises a substrate having an open cavity, for example a generally rectangular cavity, formed therein and a membrane layer overlying the substrate to close the cavity and form a membrane over the cavity. In such a structure, the cavity is sealed and set to a reference pressure, typically as close as possible to a vacuum, and is used where absolute pressure measurements are required. In contrast, in another kind of pressure sensor structure, the cavity is open opposite the membrane layer in order to enable the measurement of relative pressures. One or more piezoresistive elements are typically disposed at locations about the membrane close to edges thereof. When a pressure is applied to the pressure sensor device, the membrane deflects leading to an uneven stress distribution over the membrane. The stress can be detected most effectively by siting the piezoresistive elements at locations about the membrane where the membrane is subjected to stress the most. These locations of maximum stress depend upon the shape of the membrane employed. Taking, for example, a substantially square membrane disposed over a substantially hyperrectangular cavity, the locations of highest stress respectively coincide with points centrally located along each side of the membrane close to the edges thereof. The locations of maximum stress are, however, points on the membrane and the piezoresistive elements are larger and cover a finite area. Owing to this larger area, an entire piezoresistive element cannot be dimensioned to target only a given much smaller point location of highest stress and so any resulting average sensed stress level is diminished by regions of lower stress surrounding the point of highest stress.

For each region of maximum stress on the membrane, the respective piezoresistive element can be formed as a single element or pairs or an even number of elements. A single piezoresistive element that lies along an edge of the membrane typically senses stress on the membrane better than a single piezoresistive element running across the edge of the membrane. Piezoresistive elements formed as a pair or an even number of piezoresistive elements provide improved sensitivity over single piezoresistive elements as well as superior interconnection length matching, which is an important consideration when the piezoresistive elements are interconnected in a bridge arrangement for sensing purposes, for example a so-called Wheatstone bridge arrangement employing piezoresistors disposed on at least two sides of the membrane. Such piezoresistive elements each comprise a pair (or more) of parallel lines of piezoresistive material. In such implementations, and in the context of the square membrane mentioned above, a piezo resistive element is disposed at each of the four edges of the square membrane. All piezoresistive elements however extend in the same directions and so the parallel lines of piezoresistive material of the two longitudinal piezoresistive elements extend across two edges of the membrane, respectively, while the lines of piezoresistive material of the remaining two transverse piezoresistive elements run parallel with the other two membrane edges, respectively. In respect of the transverse piezoresistive elements, despite the improved sensitivity, some loss of sensitivity nevertheless remains owing to only part of piezoresistive material and hence the overall piezoresistive area of the entire piezoresistive sensor element residing on the edge of the membrane. Indeed, this should be understood against an established practice of not placing each of the piezoresistive elements optimally, because placement is selected to optimise integrated/average sensitivity across all piezoresistive elements. As such, a first piezoresistive line (of a pair of lines of piezoresistive material) closest the edge of the membrane is more sensitive than the other line of piezoresistive material disposed further from the edge. Similarly, the longitudinal piezoresistive elements also suffer from some loss of sensitivity.

It is known to increase sensitivity of a pressure sensor device by increasing the surface area of the membrane. However, this requires the piezoresistive elements to remain at the edges of the enlarged membrane and thus increasing the distance between the piezoresistive elements. Such an increase leads to a degradation in matching of the piezoresistive elements owing to the increased distance between them and the stress about the membrane being distributed with increasing non-uniformity as the membrane surface area increases. Additionally, as the membrane increases in size, the piezoresistive elements move closer to the edge of the semiconductor die comprising the membrane and cavity. Such proximity to the edge of the die can cause delamination of the die and/or errors in measurement as the response of the piezoresistive elements drift with time and temperature.

According to a first aspect of the present invention, there is provided a pressure sensing element for a pressure sensor device, the pressure sensing element comprising: a substrate portion comprising a cavity formed therein, a mouth of the cavity having an opening periphery; a membrane layer overlying the opening periphery of the cavity; and a strain gauge element disposed on the membrane layer over the cavity; wherein the cavity comprises a primary cavity and a first annex integrally formed with the primary cavity.

The strain gauge element disposed on the membrane layer over the cavity may extend at least partially over the first annex.

The strain gauge element disposed on the membrane layer over the cavity may extend partially over the first annex.

The cavity may comprise a peripheral side wall; a first portion of the peripheral side wall may follow a first predominant path to define a first side of the primary cavity and a second portion of the peripheral side wall may deviate away from and return to the first predominant path in respect of the first annex.

The first annex of the cavity may be substantially rectangular. A corner of the second portion of the peripheral side wall in respect of the first annex may be curved. The corner of the second portion of the peripheral side wall may be an internal corner. The corner of the second portion of the peripheral side wall may be an external corner. At least one corner of the primary cavity may be curved.

The cavity may further comprise a second annex integrally formed with the primary cavity; and a third portion of the peripheral side wall may follow a second predominant path to define a second side of the primary cavity and a fourth portion of the peripheral side wall may deviate away from and return to the second predominant path in respect of the second annex.

The first predominant path may be substantially parallel with the second predominant path.

The cavity may further comprise a third annex integrally formed with the primary cavity; a fifth portion of the peripheral side wall may follow a third predominant path to define a third side of the primary cavity and a sixth portion of the peripheral side wall may deviate away from and return to the third predominant path in respect of the third annex; and the third predominant path may be nonparallel with the first predominant path.

The third predominant path may be substantially perpendicular to the first predominant path.

The cavity may further comprise a fourth annex integrally formed with the primary cavity; a seventh portion of the peripheral side wall may follow a fourth predominant path to define a fourth side of the primary cavity and an eighth portion of the peripheral side wall may deviate away from and return to the fourth predominant path in respect of the fourth annex.

The fourth predominant path may be substantially perpendicular to the second predominant path.

The cavity may comprise a peripheral side wall; a first portion of the peripheral side wall may follow a first predominant path to define a first side of the primary cavity; the cavity may further comprise a second annex integrally formed with the primary cavity; and the first annex and the second annex respectively may extend away from the first predominant path.

A second portion of the peripheral side wall may follow a second predominant path to define a second side of the primary cavity; a third portion of the peripheral side wall may follow a third predominant path to define a third side of the primary cavity; a fourth portion of the peripheral side wall may follow a fourth predominant path to define a fourth side of the primary cavity; the cavity may further comprise a third annex and a fourth annex respectively integrally formed with the primary cavity; the third annex may extend away from the second predominant path and the fourth annex may extend away from the third predominant path; and the first, second, third and fourth portions of the peripheral side wall may define a substantially rectangular periphery.

The first annex may have a width dimension in a direction away from the first predominant path, and a length dimension parallel with the first predominant path; and a length to width dimension ratio may be less than 2.5:1.

A side of the first annex may be configured to extend along a line substantially parallel with the first side of the primary cavity for less than 50% of the length of the first side of the primary cavity.

The first annex may have a first length dimension parallel with the first predominant path; and the first length dimension may be between 10% and 20% of the length of the first side of the primary cavity.

The pressure sensing element may further comprise: an electrical bridge arrangement comprising the strain gauge element.

The strain gauge element may comprise a first portion of pressure sensitive material disposed substantially in parallel with a second portion of the pressure sensitive material.

The pressure sensitive material may be a piezoresistive material.

According to a second aspect of the present invention, there is provided a method of manufacturing a pressure sensing element for pressure sensor device, the method comprising: etching a substrate portion to form a cavity therein, a mouth of the cavity having an opening periphery; disposing a membrane layer overlying the opening periphery of the cavity; and forming a strain gauge element on the membrane layer over the cavity; wherein forming the cavity comprises forming a primary cavity and a first annex integrally formed with the primary cavity.

It is thus possible to provide a pressure sensor device and method of manufacture thereof, that provides improved sensitivity of measurement and linearity of sensitivity, the decay in sensitivity of the pressure sensor device with increasing measurement pressure being less than known membrane and cavity pressure sensor devices. The structure of the pressure sensor device obviates the need to increase the surface area of the membrane significantly accompanied by a corresponding increased spacing between pressure sensor elements. Additionally, the pressure sensor device provides improved matching of non-linearities between longitudinally and transversely disposed piezoresistive elements, relative to respective edges of a membrane. Consequently, when integrated into a bridge circuit configuration for measurement purposes, the resulting bridge has improved immunity to non-linearities of resistive elements of the bridge circuit configuration.

At least one embodiment of the invention will now be described, by way of example only, with reference to the accompanying drawings, in which:
**Figure 1** is a schematic diagram in plan view of a partially formed, unpackaged, pressure sensing element of a pressure sensor device constituting an embodiment of the invention;
**Figure 2** is a flow diagram of a method of manufacturing the partially formed pressure sensing element of Figure 1 constituting another embodiment of the invention; and
**Figures 3 to 9** are schematic diagrams of different stages of formation of the pressure sensing element of Figure 1.

Throughout the following description, identical reference numerals will be used to identify like parts.

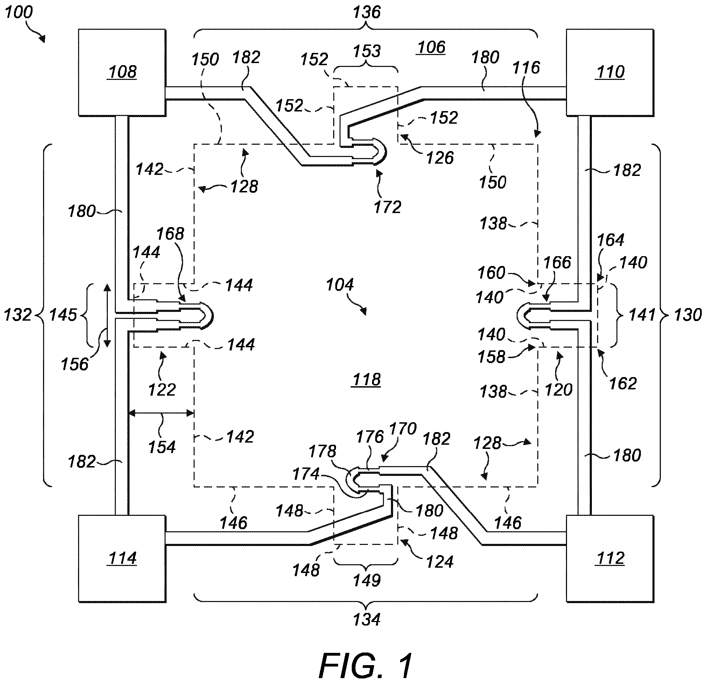

Referring to Figure 1, a partially formed pressure sensing element 100 of a pressure sensor device comprises a substrate 102 (not shown) having a cavity 104 therein and a membrane layer 106 disposed over the substrate 102. A first bond pad 108, a second bond pad 110, a third bond pad 112 and a fourth bond pad 114 are provided on the membrane layer 106 and located, in this example, close to corners 116 of the cavity 104. The cavity 104 comprises a generally rectangular primary cavity 118 and first, second, third and fourth annexes 120, 122, 124, 126 that are respectively integrally formed with the primary cavity 118. In this example, the first, second, third and fourth annexes 102, 122, 124, 126 to the primary cavity 118 respectively extend away from the primary cavity 118. The primary cavity 118 is the largest cavity out of the primary cavity 118, and the first, second, third and fourth annexes 102, 122, 124, 126 to the primary cavity 118.

In this regard, the cavity 104 comprises a peripheral side wall 128 defining the sides of the cavity 104, both a periphery of the primary cavity 118 and the first, second, third and fourth annexes 120, 122, 124, 126. The primary cavity 118 comprises, in this example, a first side 130, a second side 132, a third side 134 and a fourth side 136. Together, the first, second, third and fourth sides 130, 132, 134, 136 define the rectangular shape of the primary cavity 118. The peripheral side wall 128 therefore comprises a first portion 138 thereof that defines the first side 130 of the primary cavity 118, and in this respect the first portion 138 follows a first predominant path to define the generally straight side of the first side 130. A second portion 140 of the peripheral side wall 128 deviates away from the first predominant path and then returns to the first predominant path after extending in parallel with the first predominant path for a first predetermined distance 141 in order to form the first annex 120 having a lug-like appearance with respect to the primary cavity 118, for example the first annex 120 protrudes from the primary cavity 118. The peripheral side wall 128 also comprises a third portion 142 thereof that defines the second side 132 of the primary cavity 118, and in this respect the third portion 142 follows a second predominant path to define another generally straight side of the second side 132. A fourth portion 144 of the peripheral side wall 128 deviates away from the second predominant path and then returns to the second predominant path after extending in parallel with the second predominant path for a second predetermined distance 145 in order to form the second annex 122 having a lug-like appearance with respect to the primary cavity 118. The peripheral side wall 128 further comprises a fifth portion 146 thereof that defines the third side 134 of the primary cavity 118, and in this respect the fifth portion 146 follows a third predominant path to define another generally straight side of the third side 134. A sixth portion 148 of the peripheral side wall 128 deviates away from the third predominant path and then returns to the third predominant path after extending in parallel with the third predominant path for a third predetermined distance 149 in order to form the third annex 124 having a lug-like appearance with respect to the primary cavity 118. The peripheral side wall 128 also comprises a seventh portion 150 thereof that defines the fourth side 136 of the primary cavity 118, and in this respect the seventh portion 150 follows a fourth predominant path to define another generally straight side of the fourth side 136. An eighth portion 152 of the peripheral side wall 128 deviates away from the fourth predominant path and then returns to the fourth predominant path after extending in parallel with the fourth predominant path for a fourth predetermined distance 153 in order to form the fourth annex 126 having a lug-like appearance with respect to the primary cavity 118.

The membrane layer 106 overlies the cavity 104, which includes the first, second, third and fourth annexes 120, 122, 124, 126, and the region of the membrane layer 106 overlying the cavity 104 forms a membrane over the cavity 104.

Although in this example the cavity 104 comprises an annex in each side 130, 132, 134, 136 to the primary cavity 118, in other examples a greater or smaller number of annexes can be provided, for example an annex can be absent from one side of the cavity 104, which in the present example would mean that the cavity 104 comprises three annexes. In other examples, more than one annex to the primary cavity 118 can be provided at one or more sides of the primary cavity 118. For example, instead of the second annex 122 to the primary cavity 118 being provided at the second side 132 of the primary cavity 118, the second annex 122 to the primary cavity 118 can be provided to the first side 130 of the primary cavity 118 so that the first and second annexes 120, 122 extend away from the first predominant path.

In this example, the first side 130 is substantially in parallel with the second side 132 and substantially perpendicular with the third side 134. The fourth side 136 is substantially perpendicular with the first and second sides 130, 132, and substantially parallel with the third side 134.

The first, second, third and fourth annexes 120, 122, 124, 126 are generally rectangular and so, in this example, the first, second, third and fourth annexes 120, 122, 124, 126 each have a first external corner 158 and a second external corner 160, as well as a first internal corner 162 and a second internal corner 164. One or more of the first and second external corners 158, 160 and the first and second internal corners 162, 164 can be rounded in order to improve reliability in terms of performance, for example minimising measurement drift, and durability over the lifetime of the pressure sensor device.

Each of the first, second, third and fourth annexes 120, 122, 124, 126 have a respective width dimension 154 that extends in a direction away from the first, second, third and fourth predominant paths, respectively. The first, second, third and fourth annexes 120, 122, 124, 126 also each have a respective length dimension 156 that extends in a direction parallel with the first, second, third and fourth predominant paths, respectively. In this example, the length to width ratio of each of the first, second, third, and fourth annexes 120, 122, 124, 126 is less than 2.5 to 1. It should also be appreciated that the exact length to width ratio of each the first, second, third, and fourth annexes 120, 122, 124, 126 can differ between annexes 120, 122, 124, 126, but nevertheless typically remain within the constraint of less than 2.5 to 1.

As mentioned above, each of the second, fourth, sixth and eighth portions 140, 144, 148, 152 of the peripheral side wall 128 respectively extend in parallel with the first, second, third and fourth predominant paths, for the first, second, third and fourth predetermined distances 141, 145, 149, 153, respectively. The first, second, third and fourth predetermined distances 141, 145, 149, 153 are respectively less than 50% of the lengths of the first, second, third and fourth sides 130, 132, 134, 136 of the primary cavity 118. In this example, the first, second, third and fourth predetermined distances (lengths) 141, 145, 149, 153 are between about 10% and 20% of the length of the lengths of the first, second, third and fourth sides 130, 132, 134, 136, respectively.

A first strain gauge element 166 is disposed on the region of the membrane layer 106 that serves as the membrane near the first annex 120, a second strain gauge element 168 being disposed on the region of the membrane layer 106 that serves as the membrane near the second annex 122. A third strain gauge element 170 is disposed on the region of the membrane layer 106 that serves as the membrane near the third annex 124, and a fourth strain gauge element 172 is disposed on the region of the membrane layer 106 that serves as the membrane near the fourth annex 126. In this example, the first, second, third and fourth strain gauge elements 166, 168, 170, 172 are therefore disposed on the membrane layer 106 over the cavity 104 and extend partially over the first, second, third and fourth annexes 120, 122, 124, 126, respectively. However, in other examples, one or more of the strain gauge elements can simply be close to respective interfaces between the primary cavity 118 and the first, second, third and fourth annexes 120, 122, 124, 126.

In this example, each of the first, second, third and fourth strain gauge elements 166, 168, 170, 172 are formed from a piezoresistive material and comprise doped polysilicon. In this example, each strain gauge element comprises a first portion of polysilicon 174 and a second portion of polysilicon 176 disposed in parallel and doped with the same dopant, and constituting a first portion of pressure sensitive material substantially in parallel with a second portion of pressure sensitive material. The first and second portions of polysilicon 174, 176 are connected at first ends thereof by an interconnect portion of polysilicon 178 doped with a different dopant to the dopant employed to form the first and second portions of polysilicon 174, 176. The opposite ends of the first and second portions of polysilicon 174, 176 respectively forming each strain gauge is connected to a first bond pad connection 180 and a second bond pad connection 182.

In the present example, the first bond pad connection 180 of the second strain gauge element 168 is coupled to the first bond pad 108, and the second bond pad connection 182 of the second strain gauge element 168 is coupled to the fourth bond pad 114. The first bond pad connection 180 of the third strain gauge element 170 is coupled to the fourth bond pad 114, and the second bond pad connection 182 of the second strain gauge element 168 is coupled to the third bond pad 112. The first bond pad connection 180 of the first strain gauge element 166 is coupled to the third bond pad 112, and the second bond pad connection 182 of the first strain gauge element 166 is coupled to the second bond pad 110. The first bond pad connection 180 of the fourth strain gauge element 172 is coupled to the second bond pad 110, and the second bond pad connection 182 of the fourth strain gauge element 172 is coupled to the first bond pad 108.

The first, second, third and fourth strain gauge elements 166, 168, 170, 172 are interconnected via the first, second, third and fourth bond pads 108, 110, 112, 114 in a bridge configuration or arrangement, for example a Wheatstone bridge configuration. However, it should be appreciated that in other examples, different circuit configurations can be employed, for example a half-bridge configuration or any other suitable interconnect arrangement for measurement.

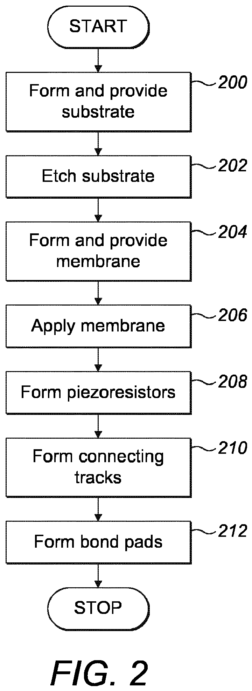

The pressure sensing element 100 as described above is formed as follows (Figures 2 to 9).

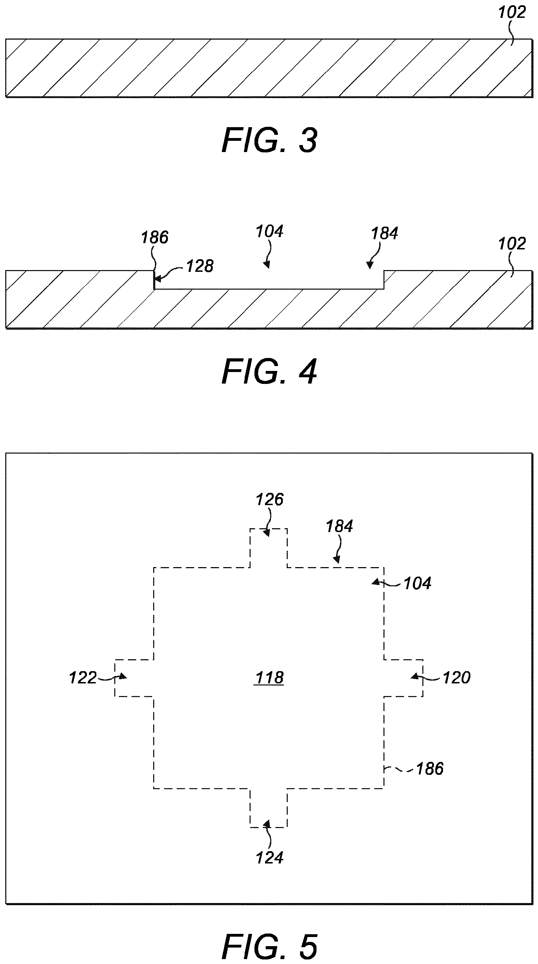

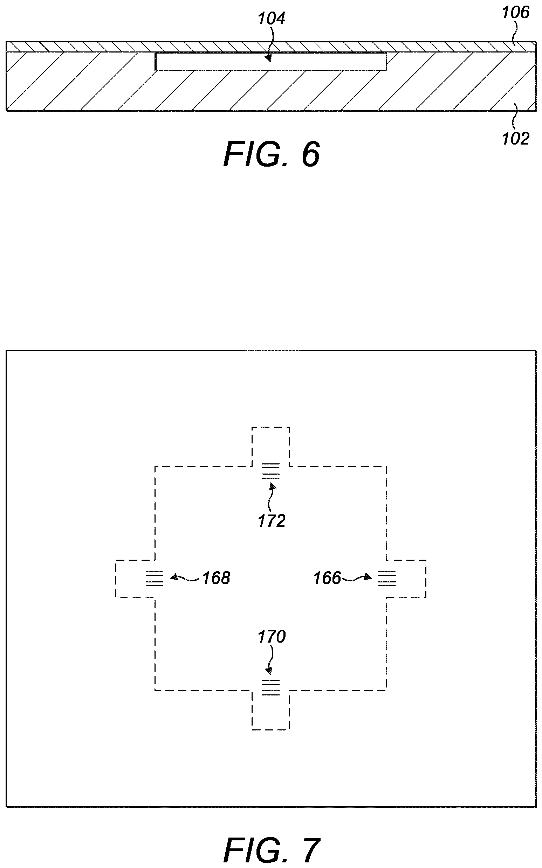

The substrate 102 is firstly formed (Step 200) using any suitable substrate manufacturing technique and provided (Figure 3) for use in formation of the pressure sensing element 100. The cavity 104 (Figures 4 and 5) is then etched (Step 202) in the substrate 102 and comprises the primary cavity 118 and the first, second, third and fourth annexes 120, 122, 124, 126. The cavity 104 has an open mouth 184 having an opening periphery 186. The membrane, constituting an diaphragm, is then formed (Step 204) using any suitable technique for membrane layer formation and then applied (Step 206) over the substrate 102 (Figure 6) to overlie the opening periphery 186 of the cavity 104, thereby closing the cavity 104 which nevertheless still possesses the opening periphery 186.

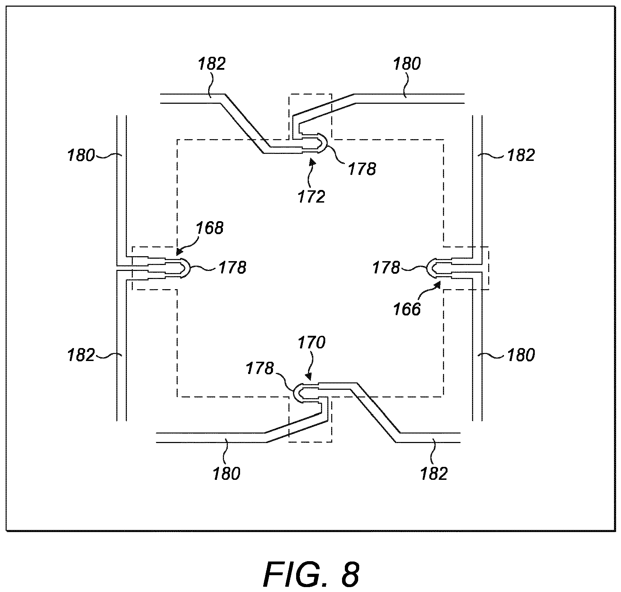

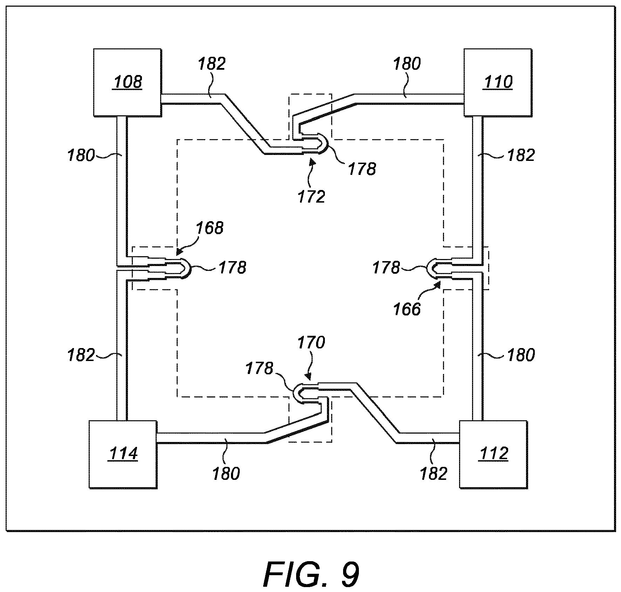

The first, second, third and fourth strain gauges 166, 168, 170, 172 (Figure 7) are formed (Step 208). The first and second bond pad connections 180, 182 and the interconnect portion 178 (Figure 8) are then disposed (Step 210) on the membrane layer 106 in preparation for interconnection of the first, second third and fourth strain gauges elements 166, 168, 170, 172. The first, second, third and fourth bond pads 108, 110, 112, 114 (Figure 9) are then formed (Step 212) on the membrane layer 106 to complete interconnection of the first, second third and fourth strain gauges elements 166, 168, 170, 172 and complete and provide electrical connection access points to the bridge configuration mentioned above.

## Claims

1. A pressure sensing element for a pressure sensor device, the pressure sensing element comprising:
a substrate portion comprising a cavity formed therein, a mouth of the cavity having an opening periphery;
a membrane layer overlying the opening periphery of the cavity; and
a strain gauge element disposed on the membrane layer over the cavity; wherein
the cavity comprises a primary cavity and a first annex integrally formed with the primary cavity.

2. A pressure sensing element as claimed in Claim 1, wherein the strain gauge element disposed on the membrane layer over the cavity extends at least partially over the first annex.

3. A pressure sensing element as claimed in Claim 1 or Claim 2, wherein
the cavity comprises a peripheral side wall, a first portion of the peripheral side wall following a first predominant path to define a first side of the primary cavity and a second portion of the peripheral side wall deviating away from and returning to the first predominant path in respect of the first annex.

4. A pressure sensing element as claimed in Claim 3, wherein:
the cavity further comprises a second annex integrally formed with the primary cavity; and
a third portion of the peripheral side wall follows a second predominant path to define a second side of the primary cavity and a fourth portion of the peripheral side wall deviates away from and returns to the second predominant path in respect of the second annex.

5. A pressure sensing element as claimed in Claim 4, wherein the first predominant path is substantially parallel with the second predominant path.

6. A pressure sensing element as claimed in Claim 4, wherein:
the cavity further comprises a third annex integrally formed with the primary cavity;
a fifth portion of the peripheral side wall follows a third predominant path to define a third side of the primary cavity and a sixth portion of the peripheral side wall deviates away from and returns to the third predominant path in respect of the third annex; and
the third predominant path is nonparallel with the first predominant path.

7. A pressure sensing element as claimed in Claim 6, wherein:
the cavity further comprises a fourth annex integrally formed with the primary cavity;
a seventh portion of the peripheral side wall follows a fourth predominant path to define a fourth side of the primary cavity and an eighth portion of the peripheral side wall deviates away from and returns to the fourth predominant path in respect of the fourth annex.

8. A pressure sensing element as claimed in Claim 1 or Claim 2, wherein
the cavity comprises a peripheral side wall, a first portion of the peripheral side wall following a first predominant path to define a first side of the primary cavity;
the cavity further comprises a second annex integrally formed with the primary cavity; and
the first annex and the second annex respectively extend away from the first predominant path.

9. A pressure sensing element as claimed in Claim 8, wherein:
a second portion of the peripheral side wall follows a second predominant path to define a second side of the primary cavity;
a third portion of the peripheral side wall follows a third predominant path to define a third side of the primary cavity;
a fourth portion of the peripheral side wall follows a fourth predominant path to define a fourth side of the primary cavity;
the cavity further comprises a third annex and a fourth annex respectively integrally formed with the primary cavity, the third annex extending away from the second predominant path and the fourth annex extending away from the third predominant path; and
the first, second, third and fourth portions of the peripheral side wall define a substantially rectangular periphery.

10. A pressure sensing element as claimed in any one of the preceding claims, wherein
the first annex has a width dimension in a direction away from the first predominant path, and a length dimension parallel with the first predominant path; and
a length to width dimension ratio is less than 2.5:1.

11. A pressure sensing element as claimed in any one of Claims 2 to 10, wherein a side of the first annex is configured to extend along a line substantially parallel with the first side of the primary cavity for less than 50% of the length of the first side of the primary cavity.

12. A pressure sensing element as claimed in Claim 11, wherein
the first annex has a first length dimension parallel with the first predominant path; and
the first length dimension is between 10% and 20% of the length of the first side of the primary cavity.

13. A pressure sensing element as claimed in any one of the preceding claims, further comprising:
an electrical bridge arrangement comprising the strain gauge element.

14. A pressure sensing element as claimed in any one of the preceding claims, wherein the strain gauge element comprises a first portion of pressure sensitive material disposed substantially in parallel with a second portion of the pressure sensitive material.

15. A method of manufacturing a pressure sensing element for pressure sensor device, the method comprising:
etching a substrate portion to form a cavity therein, a mouth of the cavity having an opening periphery;
disposing a membrane layer overlying the opening periphery of the cavity; and
forming a strain gauge element on the membrane layer over the cavity; wherein
forming the cavity comprises forming a primary cavity and a first annex integrally formed with the primary cavity.
